(19) Europäisches Patentamt
European Patent Office
Office européen des brevets

(11) Publication number: **0 004 470**
**B1**

# (12) EUROPEAN PATENT SPECIFICATION

(45) Date of publication of patent specification: 23.09.81

(51) Int. Cl.³: B 01 J 20/34, B 01 D 17/02, C 02 F 1/28

(21) Application number: 79300477.1

(22) Date of filing: 26.03.79

## (54) Process for recovering oil from water with a polymeric adsorbent, and regeneration thereof.

(30) Priority: 28.03.78 US 891088

(43) Date of publication of application:
03.10.79 Bulletin 79/20

(45) Publication of the grant of the European patent:
23.09.81 Bulletin 81/38

(84) Designated Contracting States:
DE FR GB IT NL

(56) References cited:
CH - A - 475 169
DE - C - 878 484
DE - B - 1 028 267
US - A - 2 407 180
US - A - 3 102 100

(73) Proprietor: Rohm and Haas Company
Independence Mall West
Philadelphia, Pennsylvania 19105 (US)

(72) Inventor: Fox, Chester Robert
972 Hunters Turn
Huntingdon Valley Pennsylvania 19006 (US)
Inventor: Janke, Robert Francis
3323 Riverlawn Drive
Kingwood Texas 77339 (US)
Inventor: McDonnell, Roger P.
574 Constitutional Drive
Warminster Pennsylvania 18974 (US)

(74) Representative: Angell, David Whilton et al,
Rohm and Haas Company Patent Department
Chesterfield House Barter Street
London WC1A 2TP (GB)

EP 0 004 470 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Process for recovering oil from water with a polymeric adsorbent, and regeneration thereof

This invention is concerned with the regeneration of polymeric adsorbent by its removal of oil adsorbed thereon which process is particularly useful in processes, with which the invention is also concerned, for the removal of oil from large bodies of water contaminated with such oil such as streams, ponds, and oceanic areas where oil contamination has occurred.

U.S. Patent 3,531,463 teaches the use of certain polymeric adsorbents to remove a water-immiscible organic compound, such as oil, from an aqueous system in which the organic compound is dispersed, emulsified or suspended. This patent, however, also teaches that the adsorbed liquid is removed by distillation, treatment with steam, or by leaching or desorption with water, acid, or alkaline solutions. Thus, this patent teaches cumbersome methods for removing the adsorbed liquid.

U.S. Patents 3,102,100; 3,107,726; and 3,108,059 all teach the use of surfactants to remove oil from tar sands and other oil-bearing formations; in strip mining; and in water-flooding operations. Although these patents admirably accomplish the objects of their respective inventions, such procedures could not be utilized for removing oil from large bodies of water such as streams, oceanic oil spills, and lakes and ponds because huge holding tanks would be necessary and there would be a foaming problem as well as the handling problems involved.

It is an object of this invention to provide a process whereby an adsorbent can be regenerated by removal of oil adsorbed thereon and consequently to provide an adsorption process which is effective in removing oil from large bodies of water contaminated with such oil.

According to this invention there is provided a process for the removal of oil from a polymeric adsorbent upon which it is adsorbed characterised in that the adsorbent comprises crosslinked macroreticular polymer having a specific surface area of 5 to 2000 sq.m.per gram and the adsorbent is contacted with an aqueous solution of non-ionic surfactant at a pH of 9 to 13, said surfactant being of the general formula $RNH\ (CH_2CH_2O)_nH$ wherein R is an alkyl group of 10 to 24 carbon atoms and n is 1 to 25 to elute the adsorbed oil and regenerate the adsorbent.

Using the process of the invention as one of its steps, the invention also provides a process for the removal of oil from water contaminated with it, comprising the steps of passing the contaminated water through a bed of polymeric adsorbent capable of preferentially adsorbing oil, removing substantially oil-free water from said bed, regenerating said adsorbent by eluting the adsorbed oil with an aqueous solution of non-ionic surfactant, at a pH of from 9 to 13, said surfactant being of the general formula $RNH\ (CH_2CH_2O)_nH$ wherein R is an alkyl group of 10 to 24 carbon atoms and n is 1 to 25, adjusting the pH of the oil-containing eluate to from 2 to 6 thereby creating a two-phase liquid of oil and acidified surfactant solution, removing the oil from said two-phase liquid and readjusting the pH of the acidified surfactant solution to from 9 to 13.

The process of the invention can be used to remove oil from water wherein the oil is present in amounts as low as 200 parts or less per million parts of water. The equipment used may be designed so that it is movable from one location to another. Thus, the process may be practiced using equipment which is situated upon a barge or other floating platform located in the middle of the water which is contaminated with oil. In addition, the oil can be recovered and may be used for its originally intended purpose.

If desired, prior to passing the oil contaminated water through the bed of resin, usually in a column, the oil may be physically skimmed from a relatively quiet body of oil-contaminated water.

The size of the column used may vary and is governed by economic and hydraulic considerations and the normal considerations attendant to a mobile unit and its location.

Useful cross-linked macroreticular polymeric adsorbents include those which have a particle size of from 10 to 100 mesh (U.S. Standard Sieve) and preferably from 20 to 60 mesh and a porosity of at least 10% (percent volume of pores in the adsorbent body or bodies).

Among the polymeric adsorbents which may be used are the macroreticular cross-linked polymers of condensation or addition types such as those disclosed in U.S. Patent Specifications 3,531,463 and 3,663,467. Preferred adsorbents in this invention are those stated to be preferred in the U.S. Specifications first mentioned the disclosures of which are hereby incorporated into this specification by reference. Other cross-linked macroreticular polymer adsorbents are well known to those skilled in the art and the invention is not to be construed as limited to any particular cross-linked macroreticular polymeric adsorbent.

It is particularly preferred to use a polymeric adsorbent which is a styrene-divinylbenzene-ethylvinylbenzene terpolymer.

It is preferred, in the surfactant, that R be from 12 to 14.

Any alkyl amine or mixture thereof may be used to prepare the surfactant which is used to regenerate the polymeric adsorbent provided that the carbon chain length, or average length in the case of a mixture of amines, of such

amine is not greater than 24. Thus, amines such as dodecyl, hexadecyl, stearyl and tetracosanyl may be used.

The alkyl amine used is condensed with an average of 1 to 25 moles of ethylene oxide and preferably 5 to 10 moles of ethylene oxide. If an average of more than 25 moles of ethylene oxide are used, then the resultant surfactant will not have the properties desired for regenerating the adsorbent.

The surfactant is generally used as an aqueous solution containing from about 1 to about 25% of surfactant by weight of the solution. Below 1% concentration in regeneration becomes inefficient. Although amounts in excess of 25% surfactant in aqueous solution may be used. There is no advantage in using concentrations above 25% which are therefore economically disadvantageous.

The substantially oil-free water can be returned to its source without further treatment. When the capacity of the adsorbent for adsorbing oil is substantially exhausted, the surfactant solution, which is at a pH of from 9 to 13 preferably 10 to 12 is passed through the adsorbent usually in an amount of from about 1 to about 4 bed volumes of surfactant solution. (A bed volume is the volume the adsorbent occupies in the column). Using less than 1 bed volume the regeneration of the adsorbent may be incomplete. Although more than 4 bed volumes may be used, there is generally no advantage.

In a particularly preferred embodiment, the surfactant solution is passed upward through the polymeric adsorbent at such a rate that the solution scours the adsorbent and puts the polymeric adsorbent particles in motion.

The resultant water-oil-surfactant emulsion is then transmitted to a holding tank of suitable size and the emulsion is acidified to a pH of from 2 to 6 preferably 2 to 4. The emulsion is thus broken and a two-phase liquid results. The upper phase is the oil and the lower phase is the acidified surfactant solution. The oil phase is then removed for example by skimming or decanting leaving a single phase of acidified surfactant solution.

Any strong acid may be used to acidify the emulsion. Such acids are well-known in the art. Preferred is sulfuric acid.

The acidified surfactant solution is then passed into an alkalizing tank and a suitable alkali, such as sodium hydroxide, added to readjust the pH of the solution to that which existed prior to acidification i.e. to 9 to 13 preferably 10 to 12. The surfactant is then ready for reuse as regenerant.

In this specification we use the word "oil" according to its conventional definition, that is to say a liquid, not miscible with water, generally combustible and soluble in ether, typically:

(a) fixed oils — fatty substances of vegetable and animal organisms — contain esters (usually glycerol esters) of fatty acids;

(b) volatile or essential oils — odorous principles of vegetable organisms — contain terpenes, camphors and related compounds;

(c) mineral oils, fuel oils and lubricants — hydrocarbons derived from petroleum and its products.

One embodiment of the invention will now be more fully described for illustration only, in the following Example.

## Example

Oil-contaminated water is prepared by stirring in a beaker, for 16 hours, 200 liters of deionized tap water and two gallons of crude oil. The mixture is allowed to stand for two hours and the oil floating on top of this mixture is siphoned off.

The turbid oil-water mixture is fed to a glass column which contains 50 milliliters of a 20 to 60 mesh polymeric adsorbent which is a terpolymer of styrene-divinylbenzene-ethylvinylbenzene. The adsorbent beads have a porosity of 42% by volume and a surface area of 300 square meters per gram of adsorbent. The glass column is 100 centimeters tall and has an inside diameter of 1 centimeter. The oil-water mixture is flowed through the adsorbent containing column at the rate of 4 bed volumes per hour. The treated water leaving the adsorbent column is clear and essentially free of oil.

After the adsorbent is substantially exhausted, the flow of the oil-water mixture through the column is stopped and the liquid is drained from the column until the level of liquid within the column is 1 centimeter above the adsorbent beads. An aqueous regenerant solution containing 20% of dodecyl amine condensed with 5 moles of ethylene oxide and having a pH of 11 is prepared. This regenerant solution is passed upward through the adsorbent bed at a rate such that the adsorbent beads expand from 75 to 100 percent of the original static bed depth. A total of 4 bed volumes (200 milliliters) of regenerant solution is passed through the bed. After the first 2 bed volumes of regenerant have been passed through the column, the column is sparged with air for 5 minutes. After the four bed volumes of regenerant solution have been passed through the column, the adsorbent bead is rinsed with two bed volumes (100 milliliters) of water at a flow rate of two bed volumes per hour in the down-flow direction prior to the adsorbent bed being suitable for reuse.

The resultant emulsified oil-water eluted from the column is held in a holding tank. A 10 percent aqueous solution of sulfuric acid is added to the holding tank until the pH of the mixture is adjusted to 3. A two phase liquid mixture results. The oil (upper phase) is then removed by physically skimming the oil from the two phase liquid.

The remaining phase of the acidified spent

regenerant solution is then neutralized with a 25 percent aqueous sodium hydroxide solution so that the pH of the lower layer is adjusted to 12. The regenerant solution is now ready to be reused.

## Claims

1. A process for the removal of oil from a polymeric adsorbent upon which it is adsorbed characterised in that the adsorbent comprises cross-linked macroreticular polymer having a specific surface area of 5 to 2000 sq.m.per gram and the adsorbent is contacted with an aqueous solution of non-ionic surfactant at a pH of 9 to 13, said surfactant being of the general formula RNH $(CH_2CH_2O)_nH$ wherein R is an alkyl group of 10 to 24 carbon atoms and n is 1 to 25 to elute the adsorbed oil and regenerate the adsorbent.

2. A process for recovering oil from water contaminated with said oil characterised in that the water contaminated with oil is passed through a bed of cross-linked macroreticular polymeric adsorbent having a specific surface area of 5 to 2000 sq.m. per gram and capable of preferentially adsorbing oil, passing substantially oil-free water from said bed, eluting the adsorbed oil and regenerating the adsorbent by a process as claimed in Claim 1, adjusting the pH of the oil-containing eluate to from 2 to 6 thereby creating a two-phase liquid of oil and acidified surfactant solution, removing the oil from said two-phase liquid and readjusting the pH of the acidified surfactant solution to from 9 to 13.

3. A process according to Claim 1 or 2 wherein said surfactant is caused to flow upward through a bed of particles of the polymeric adsorbent at such a rate as to scour the adsorbent and put adsorbent particles into motion.

4. A process according to any preceding claim wherein the aqueous solution of surfactant contains 1 to about 25% by weight of surfactant.

5. A process according to any preceding claim wherein the pH of the aqueous surfactant solution is from 10 to 12 when used to regenerate the adsorbent.

6. A process according to any of Claims 2 to 5 wherein the pH of the oil containing eluate is adjusted to from 2 to 4 after contact with the adsorbent.

7. A process according to any of Claims 2 to 6 wherein the pH of the acidified surfactant solution is readjusted to from 10 to 12.

## Revendications

1. Procédé pour éliminer de l'huile d'un adsorbant polymère sur lequel elle est adsorbée, caractérisé en ce que l'adsorbant comprend un polymère réticulé macroréticulaire ayant une surface spécifique de 5 à 2000 $m^2/g$ et que l'adsorbant est mis en contact avec une solution aqueuse d'un agent tensio-actif non ionique à un pH de 9 à 13, cet agent tensio-actif répondant à la formule générale

$$RNH(CH_2CH_2O)_nH$$

où R représente un radical alcoyle comportant 10 à 24 atomes de carbone et n a une valeur de 1 à 25, pour éleur l'huile adsorbée et régénérer l'adsorbant.

2. Procédé pour récupérer de l'huile souillant de l'eau, caractérisé en ce que l'on fait passer l'eau souillée par l'huile à travers un lit d'un adsorbant polymère réticulé macroréticulaire ayant une surface spécifique de 5 à 2000 $m^2/g$ et capable d'adsorber préférentiellement l'huile, de l'eau pratiquement débarrassée d'huile sortant du lit, on élue l'huile adsorbée et on régénère l'adsorbant selon un procédé comme revendiqué dans la revendication 1, on ajuste le pH de l'éluat contenant l'huile à 2 à 6 pour créer un liquide à deux phases constitué d'huile et de la solution acidifiée de l'agent tensio-actif, on élimine l'huile dudit liquide à deux phases et on réajuste le pH de la solution acidifiée de l'agent tensio-actif à 9 à 13.

3. Procédé selon l'une des revendications 1 ou 2, caractérisé en ce qu'on fait s'élever ledit agent tensio-actif à travers un lit de particules de l'adsorbant polymère à un débit tel que l'adsorbant soit nettoyé et que les particules d'adsorbant soient mises en mouvement.

4. Procédé selon l'une quelconque des revendications précédentes, caractérisé en ce que la solution aqueuse de l'agent tênsio-actif contient 1 à environ 25% en poids d'agent tensio-actif.

5. Procédé selon l'une quelconque des revendications précédentes, caractérisé en ce que le pH de la solution aqueuse d'agent tensio-actif est compris entre 10 et 12 lorsqu'on l'utilise pour régénérer l'adsorbant.

6. Procédé selon l'une quelconque des revendications 2 à 5, dans lequel on ajuste le pH de l'éluat contenant l'huile entre 2 et 4 après le contact avec l'adsorbant.

7. Procédé selon l'une quelconque des revendications 2 à 6, dans lequel on réajuste à 10 à 12 le pH de la solution acidifiée d'agent tensio-actif.

## Patentansprüche

1. Verfahren zur Entfernung von öl von einem polymeren Adsorbens, an dem das öl adsorbiert ist, dadurch gekennzeichnet, daß das eingesetzte Adsorbens aus einem vernetzten makroretikularen Polymeren mit einer spezifischen Oberfläche von 5 bis 2000 $m^2/g$ besteht und mit einer wäßrigen Lösung eines nichtionischen grenzflächenaktiven Mittels mit einem pH von 9 bis 13, wobei das eingesetzte grenzflächenaktive Mittel der allgemeinen Formel

$$RNH(CH_2CH_2O)_nH$$

worin R für eine Alkylgruppe mit 10 bis 24 Kohlenstoffatomen steht und n 1 bis 25 bedeutet, entspricht, zur Eluierung des adsorbierten öls und zum Regenerieren des Adsorbenses kontaktiert wird.

2. Verfahren zur Wiedergewinnung von öl aus Wasser, das mit dem öl verunreinigt ist, dadurch gekennzeichnet, daß das mit öl verunreinigte Wasser durch ein Bett aus einem vernetzten makroretikularen polymeren Adsorbens mit einer spezifischen Oberfläche von 5 bis 2000 $m^2/g$, das vorzugsweise öl adsorbiert, geschickt wird, ein im wesentlichen ölfreies Wasser aus dem Bett abgezogen wird, das adsorbierte öl eluiert und das Adsorbens nach einem Verfahren gemäß Anspruch 1 regeneriert wird, der pH des ölenthaltenden Eluats auf einen Wert zwischen 2 und 6 zur Erzeugung einer 2-Phasenflüssigkeit aus öl und angesäuerter grenzflächenaktiver Lösung eingestellt wird, das öl von der 2-Phasenflüssigkeit entfernt und erneut der pH der angesäuerten Lösung des grenzflächenaktiven Mittels auf einen Wert zwischen 9 und 13 eingestellt wird.

3. Verfahren nach Anspruch 1 oder 2, dadurch gekennzeichnet, daß man das grenzflächenaktive Mittel nach oben durch ein Bett aus Teilchen aus dem polymeren Adsorbens mit einer solchen Geschwindigkeit fließen läßt, daß das Adsorbens aufgeschlämmt wird und Adsorbensteilchen in Bewegung gesetzt werden.

4. Verfahren nach einem der vorhergehenden Ansprüche, dadurch gekennzeichnet, daß die eingesetzte wäßrige Lösung des grenzflächenaktiven Mittels 1 bis ungefähr 25 Gew.-% des grenzflächenaktiven Mittels enthält.

5. Verfahren nach einem der vorhergehenden Ansprüche, dadurch gekennzeichnet, daß der pH-Wert der eingesetzten wäßrigen Lösung des grenzflächenaktiven Mittels bei der Regenerierung des Adsorbenses auf einen Wert zwischen 10 und 12 eingestellt wird.

6. Verfahren nach einem der Ansprüche 2 bis 5, dadurch gekennzeichnet, daß der pH der ölenthaltenden Eluats auf einen Wert von 2 bis 4 nach der Kontaktierung mit dem Adsorbens eingestellt wird.

7. Verfahren nach einem der Ansprüche 2 bis 6, dadurch gekennzeichnet, daß der pH der angesäuerten Lösung des grenzflächenaktiven Mittels erneute auf einen Wert zwischen 10 und 12 eingestellt wird.